(19) Europäisches Patentamt
European Patent Office
Office européen des brevets

(11) Veröffentlichungsnummer: **0 036 597**
**B1**

(12) # EUROPÄISCHE PATENTSCHRIFT

(45) Veröffentlichungstag der Patentschrift: **15.02.84**

(51) Int. Cl.³: **B 01 D 19/04**, C 09 D 7/12

(21) Anmeldenummer: **81101928.0**

(22) Anmeldetag: **16.03.81**

(54) **Schaumdämpfungsmittel und dessen Verwendung in Kunstharz-, Lack- und Farbdispersionen.**

(30) Priorität: **24.03.80 DE 3011304**

(43) Veröffentlichungstag der Anmeldung: **30.09.81 Patentblatt 81/39**

(45) Bekanntmachung des Hinweises auf die Patenterteilung: **15.02.84 Patentblatt 84/7**

(84) Benannte Vertragsstaaten: **AT BE CH DE FR GB IT LI LU NL SE**

(56) Entgegenhaltungen:
**DE - A - 2 031 827**
**DE - A - 2 115 082**
**DE - A - 2 222 996**
**DE - A - 2 233 817**
**DE - A - 2 419 824**
**DE - A - 2 518 053**
**DE - A - 2 534 250**
**DE - A - 2 625 160**
**DE - A - 2 943 754**
**DE - B - 2 345 335**
**US - A - 3 235 498**
**US - A - 3 492 242**

(73) Patentinhaber: **Henkel Kommanditgesellschaft auf Aktien, Postfach 1100 Henkelstrasse 67, D-4000 Düsseldorf-Holthausen (DE)**

(72) Erfinder: **Grünert, Margarete, geb.Hartlieb, Flottheide 9, D-4044 Kaarst (DE)**
Erfinder: **Hempel, Hans-Ulrich, Dr., Wiesengrund 5, D-5063 Overath (DE)**
Erfinder: **Tesmann, Holger, Dr., Vennstrasse 61, D-4000 Düsseldorf 12 (DE)**

EP 0 036 597 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

# Schaumdämpfungsmittel und dessen Verwendung in Kunstharz-, Lack- und Farbdispersionen

Die vorliegende Erfindung betrifft ein Schaumdämpfungsmittel, das wasserunlösliche Polysiloxan-Polyether-Blockpolymere sowie weitere, die Wirkung des Blockpolymerisats steigernde Verbindungen enthält, jedoch frei ist von feinverteilter Kieselsäure und sich daher besonders für solche Anwendungsgebiete eignet, bei denen unlösliche mineralische Bestandteile stören würden.

Aus der DE-AS 1012602, der DE-AS 1040251 und der DE-AS 1115927 sind Polysiloxan-Polyether-Blockpolymerisate bekannt, die wasserlöslich machende Polyethylenglykolethergruppen enthalten. Sie besitzen zwar schaumdämpfende Eigenschaften, jedoch sind diese gegenüber Dimethylpolysiloxanen nur wenig ausgeprägt. Sie haben daher keine Verwendung als Antischaummittel gefunden, sondern sind beispielsweise zu Polyurethanschäumen weiterverarbeitet worden (vgl. DE-AS 1669912, DE-AS 1942868 und DE-OS 2001355), in denen sie als Schaumstabilisatoren wirken.

Wasserunlösliche, Polypropylenglykolethergruppen aufweisende Polysilan-Blockpolymere sind aus der DE-AS 2345335, der DE-AS 2443853 und der DE-AS 2518053 bekannt. Sie besitzen im Gemisch mit hochdisperser Kieselsäure oder hochdispersem Aluminiumoxid ausgeprägte schaumdämpfende Eigenschaften und können zusätzliche, die Schaumdämpfung verstärkende Bestandteile, wie Mineralöl beziehungsweise die Verteilbarkeit in wässerigen Systemen fördernde Emulgatoren enthalten. Obligatorisch ist in allen Fällen die Anwesenheit der vorgenannten hochdispersen Oxide, insbesondere des Siliciumdioxids beziehungsweise eines Siliciumdioxid enthaltenden Harzes. Dieser Bestandteil macht die Antischaummittel jedoch für bestimmte Anwendungsgebiete weniger geeignet. Hierzu zählen zum Beispiel Kunstharz-, Lack- oder Farbstoffdispersionen, die für die Herstellung hochglänzender beziehungsweise klarer Filme und Beschichtungen bestimmt sind. In diesen Fällen können Kieselsäure oder Aluminiumoxid enthaltende Polyethersiloxane die Bildung von Mikroschäumen nicht ausreichend unterdrücken, was zu einem deutlichen Glanzverlust führt. Diese Nachteile werden durch die vorliegende Erfindung vermieden.

Gegenstand der Erfindung ist ein Schaumdämpfungsmittel, enthaltend Polysiloxan-Polyether-Blockpolymere und weitere schaumdämpfend wirkende Substanzen, die frei von hochdispersem Siliciumdioxid und Aluminiumoxid sind, gekennzeichnet durch die folgende Zusammensätzung

(A) 3 bis 10 Gewichtsprozent eines Polysiloxan-Polyether-Blockpolymerisats der Formel

$$HO(C_3H_6O)_x-C_3H_6-\left[\begin{array}{c}CH_3\\ |\\ Si-O\\ |\\ CH_3\end{array}\right]_y-\left((C_3H_6O)_x-C_3H_6-\left[\begin{array}{c}CH_3\\ |\\ Si-O\\ |\\ CH_3\end{array}\right]_y\right)_n-\begin{array}{c}CH_3\\ |\\ Si\\ |\\ CH_3\end{array}\left(C_3H_6-(OC_3H_6)_xO\right)_m H$$

mit m=0 oder 1, n=0 bis 2, x=20 bis 100 und y=5 bis 30,

(B) 65 bis 85 Gewichtsprozent eines mit Wasser nicht mischbaren Öles aus der Klasse der Mineralöle, fetten Öle und Fettalkohole,

(C) 5 bis 30 Gewichtsprozent mindestens einer weiteren schaumdämpfend wirkenden Substanz aus der Klasse der Polypropylenglykol-Polyethylenglykol-Blockpolymeren mit einem Molekulargewicht von 1000 bis 4000, deren Mono- oder Diester mit 18 bis 24 Kohlenstoffatome aufweisenden Fettsäuren und Hydroxyfettsäuren und der Mono- und Diester der genannten Fettsäuren und Hydroxyfettsäuren des Hydroxystearylalkohols,

(D) 1 bis 6 Gewichtsprozent mindestens eines Emulgiermittels aus der Klasse der 4 bis 12 Ethylenglykolethergruppen aufweisenden Polyglykoletherderivate von 12 bis 20 Kohlenstoffatome aufweisenden Alkoholen und 8 bis 12 Alkylkohlenstoffatome aufweisenden Alkylphenole,

(E) 1 bis 5 Gewichtsprozent mindestens einer Erdalkalimetall- oder Aluminiumseife von 16 bis 20 Kohlenstoffatome aufweisenden Fettsäuren.

Die Blockpolymeren (A) sind in bekannter Weise erhältlich, indem man beispielsweise zunächst Dimethyldichlorsilan und Dimethylchlorsilan im Molverhältnis 3:1 bis 20:1 cohydrolysiert und anschliessend in Gegenwart von Lewis-Säuren bei Temperaturen im Bereich von 20 bis 100° C äquilibriert. Das erhaltene Polydimethylsiloxan folgender Strukturformel

$$H-\begin{array}{c}CH_3\\ |\\ Si\\ |\\ CH_3\end{array}-\left[\begin{array}{c}CH_3\\ |\\ OSi\\ |\\ CH_3\end{array}\right]_y-H$$

in der y die vorgenannte Bedeutung hat, wird propoxyliertem Allylalkohol der Formel

$$CH_2=CH-CH_2-O-(C_3H_6O)_xH$$

in Gegenwart von Hexachloroplatinsäure oder eines auf Aktivkohle fixierten Platinkatalysators mehrere Stunden auf Temperaturen von beispielsweise 100 bis 160° C erhitzt, wobei die Allylgruppe an die SiH-Gruppe addiert wird. Bei alkalischer Reaktion der Lösung kann unter Wasserstoffentwicklung gleichzeitig eine Veretherungsreaktion zwischen der terminalen Hydroxylgruppe des Allylpolyethers und einer weiteren SiH-Gruppe eintreten. Durch Verwendung saurer Pufferlösungen (vgl. DE-AS 1267220) kann diese Nebenreaktion

ganz oder teilweise unterdrückt werden. Nachteile sind mit dieser Veretherungsreaktion nicht verbunden.

Vorzugsweise werden Blockpolymere (A) der genannten Formel verwendet, in denen m=0 oder 1, n=0 oder 1, x=30 bis 60 und y=12 bis 20 betragen.

Die Komponente (B) besteht vorzugsweise aus Mineralöl, zum Beispiel einem paraffinischen oder naphthenischen Mineralöl, Weissöl oder dergleichen. Das Mineralöl kann gegebenenfalls auch ganz oder teilweise durch fette Öle, wie flüssige Fettsäuretriglyceride und Partialglyceride ersetzt sein, die sich von gesättigten und ungesättigten $C_{10}$-$C_{18}$-Fettsäuren ableiten, ferner durch flüssige Fettalkohole und Oxoalkohole vergleichbarer Kettenlänge. Mineralöle werden bevorzugt eingesetzt, und zwar in Mengen von 70 bis 82 Gewichtsprozent.

Als weitere schaumdämpfend wirkende Komponente (C) kommen die nachstehend genannten in Frage.

(C1) Ethylenoxid-Propylenoxid-Blockpolymere mit einem Molekulargewicht von 1000 bis 4000, insbesondere 1500 bis 3200, wobei das Verhältnis von Ethylen- zu Propylenglykolethergruppen 20:80 bis 5:95, insbesondere 10:90 beträgt,

(C2) Fettsäuremonoester und -diester von Ethylenoxid-Propylenoxid-Blockpolymeren, vorzugsweise der unter (C 1.) definierten Blockpolymeren, wobei die gesättigten Fettsäuren beziehungsweise Hydroxyfettsäuren 18 bis 24 C-Atome aufweisen und zum Beispiel aus Stearin-, Arachin-, Behen-, Lignocerin-, Hydroxystearin-, Hydroxyarachin- und Hydroxybehensäure sowie deren Gemischen bestehen können. Als gut brauchbar haben sich zum Beispiel die Behensäuremono- und -diester eines Polypropylen-Polyethylenglykol-Blockpolymerisats (PO zu EO= 80:20 bis 95:5) mit Behensäure erwiesen.

(C3) Mono- und Diester des 9- oder 10- oder 12-Hydroxystearylalkohols mit einer gesättigten Fettsäure beziehungsweise Hydroxyfettsäure, welche 18 bis 22 Kohlenstoffatome aufweist und beispielsweise aus Stearin-, Arachin-, Behen- und Hydroxystearinsäure oder deren Gemischen bestehen kann. Als besonders geeignet hat sich zum Beispiel der Behensäuremono- beziehungsweise -diester des 9- beziehungsweise 10-Hydroxystearylalkohols erwiesen.

Der Bestandteil (C) ist in Anteilen von 5 bis 30, vorzugsweise von 10 bis 20 Gewichtsprozent anwesend.

Als Dispergiermittel (D), das in Mengen von 1 bis 6, vorzugsweise 2 bis 5 Gewichtsprozent anwesend ist, eignen sich Polyethylenglykolether von Alkoholen mit 12 bis 20 C-Atomen, die synthetischen oder natürlichen Ursprungs sein können und zum Beispiel aus Lauryl-, Myristyl-, Cetyl-, Stearyl-, Oleyl-, Cocos-, Palmkern- oder Talgalkoholen beziehungsweise Oxoalkoholen bestehen und durchschnittlich 4 bis 12, vorzugsweise 5 bis 10 Ethylenglykolethergruppen aufweisen. Besonders geeignet sind zum Beispiel Oleylalkohole sowie dessen Gemische mit gesättigten $C_{14-18}$-Alkoholen, enthaltend 5 bis 8 Ethylenglykolethergruppen. Anstelle der genannten ethoxylierten Alkohole sind auch ethoxylierte Alkylphenole mit 4 bis 12, insbesondere 7 bis 10 Ethylenglykolethergruppen und 8 bis 12, vorzugsweise 9 bis 10 C-Atomen aufweisenden linearen Alkylgruppen brauchbar.

Die Komponente (E), die als Stabilisierungsmittel wirkt, besteht aus Seifen von gesättigten 16 bis 20 C-Atome aufweisenden Fettsäuren und Erdalkalimetallen, vorzugsweise des Magnesiums sowie Aluminiums. Besonders geeignet sind Magnesium- und Aluminiumstearat. Der Anteil der Komponente (E) beträgt 1 bis 5, vorzugsweise 2 bis 4 Gewichtsprozent.

Die erfindungsgemässen Schaumdämpfungsmittel werden durch Homogenisieren der vorgenannten Komponenten, vorzugsweise unter Erwärmen auf Temperaturen zwischen 90 und 110° C, wobei es sich empfiehlt, die Komponenten (B) und (C) vorzulegen und anschliessend die Komponenten (D), (E) und (A) in der genannten Reihenfolge zuzumischen. Das Gemisch ist lagerbeständig oder kann unmittelbar weiterverwendet werden.

Das erfindungsgemässe Schaumdämpfungsmittel eignet sich hervorragend zur Schaumunterdrückung in solchen Systemen, in denen die Anwesenheit von unlöslicher Kieselsäure stören würde. Dies sind insbesondere zur Schaumbildung neigende Kunstharz-, Lack- und Farbstoffdispersionen, die zur Herstellung klarer beziehungsweise hochglänzender Formstücke, Lacke und Beschichtungen bestimmt sind. Die Einsatzmengen an Schauminhibitor betragen in derartigen Zubereitungen 0,01 bis 1,5 Gewichtsprozent, vorzugsweise 0,05 bis 1 Gewichtsprozent. Die Schauminhibitoren sind trotz der Abwesenheit von feindisperser Kieselsäure hochwirksam, beeinträchtigen jedoch nicht den Glanz und unterbinden wesentlich zuverlässiger die Bildung störender Mikroschäume. Glanzfarben mit dem eingearbeiteten Entschäumer sind lagerstabil. Auch der Glanz der aufgebrachten Lacke ist wesentlich höher als der vergleichbarer Lacke, die ohne den erfindungsgemässen Zusatz hergestellt wurden. Hervorzuheben ist auch die gute Hydrolysebeständigkeit der Schauminhibitoren, die ihnen ein breites Anwendungsspektrum erschliesst.

*Beispiele*

I. *Herstellung der Ausgangsverbindung*

a) Zur Herstellung eines Allylalkohol-Propylenoxid-Adduktes wurden Allylalkohol und Propylenoxid im Molverhältnis 1:64 in Gegenwart von KOH als Katalysator bei 110 bis 130° C in bekannter Weise umgesetzt. Der Katalysator wurde durch Zusatz von Essigsäure neutralisiert und das Produkt durch Erhitzen auf 130° C im Vakuum entgast und anschliessend filtriert. Der Polyether wies folgende Kennzahlen auf: OHZ=43,9; JZ=12,4; SZ=0,4, Zahl x der Oxypropylengruppen (mittels Gelchromatogramm bestimmt)=40.

b) Durch gemeinsame Hydrolyse von Dimethyldichlorsilan und Dimethylchlorsilan im Molverhältnis 5:1, anschliessender Äquilibrierung des Cohydrolysats in Gegenwart von Bleicherde und abschliessendem Entfernen flüchtiger Bestandteile bei 150° C im Vakuum wurde ein Polysiloxan mit α,ω-ständigen Wasserstoffatomen erhalten mit y=15,1 und ein Gehalt an gebundenem Wasserstoff von 0,171% ermittelt.

II. *Herstellung des Blockpolymerisats*

*Blockpolymerisat (A1)*

344 g der unter (Ia) beschriebenen Verbindung und 0,5 g eines Katalysators, der 5% Platin auf Aktivkohle enthielt, wurden bei 100° C unter Rühren in Stickstoffatmosphäre im Verlauf von 30 Minuten mit 118 g des unter (Ib) beschriebenen Siloxans versetzt. Der Ansatz wurde weitere 2 Stunden bei 100° C belassen, danach 3 Stunden auf 150° C erhitzt, abgekühlt und filtriert. Das entstandene Produkt hatte folgende Kennzahlen:

| | |
|---|---|
| Viskosität (20° C): | 580 mPa·s |
| Dichte (20° C): | 0,9897 $gcm^{-3}$ |
| Jodzahl: | 2,4 |
| Hydroxylzahl: | 33,0 |

Die Hydroxylzahl des Reaktionsprodukts stimmt mit der des eingesetzten Allylalkohol-Propylenoxid-Addukts überein, wenn man die Verdünnung durch das Siloxan berücksichtigt. Dies zeigt, dass keine Reaktion der OH-Gruppen mit den Si-H-Gruppen stattgefunden hatte.

Im Gelpermeationschromatogramm (GPC) der Verbindung waren zwei Maxima erkennbar, die einer Molmasse von 5900 beziehungsweise 3400 entsprachen. Demnach lagen zwei Verbindungen vor, und zwar ein Polyether-Siloxan-Polyether mit n=0 und m=1 (Anteil ca. 70%) und ein Polyether-Siloxan mit n=0 und m=0 (Anteil ca. 30%).

*Blockpolymerisat (A2)*

Ein nach der unter (Ia) gegebenen Vorschrift hergestelltes Allylalkohol-Propylenoxid-Addukt wies folgende Kennzahlen auf: OHZ=36,3; JZ=14,5; SZ=0,4, x=57.

379,0 g dieses Produkts wurden in 400 ml Toluol gelöst und mit Hexachlorplatinsäure (gelöst in t-Butanol) entsprechend einer Menge von 20 mg Platin versetzt. Im Verlauf von 30 Minuten wurden bei 90° C unter Rühren in Stickstoffatmosphäre 114,7 g eines nach der Vorschrift 2.) hergestellten Siloxans mit einem mittleren y von 14,7 zugetropft. Der Ansatz wurde bei 90° C gehalten, bis im Infrarotspektrum einer Probe keine Si-H-Banden mehr erkennbar waren (ca. 5 Stunden). Zur Entfernung des Katalysators wurde die Lösung bei 80° C mit Aktivkohle versetzt und filtriert, danach wurde im Vakuum das Toluol abdestilliert.

Das entstandene Produkt hatte folgende Kennzahlen:

| | |
|---|---|
| Viskosität (20° C): | 1170 mPa·s |
| Dichte (20° C): | 0,9947 $gcm^{-3}$ |
| JZ: | 2,1 |
| OHZ: | 19,9 |

Das GPC der Verbindung zeigte zwei Maxima entsprechend einer Molmasse von 7900 (m=1, n=0) mit einem Anteil von ca. 60 Gewichtsprozent und einer Molmasse von 4500 (m=0, n=0) mit einem Anteil von ca. 30 Gewichtsprozent. Weiterhin zeigte das GPC eine Schulter bei einer Molmasse von ca. 12500 und einem Anteil von ca. 10 Gewichtsprozent. Dieser Molmasse kann ein Blockpolymeres mit m=1 und n=1 zugeordnet werden.

In ähnlicher Weise wurden weitere Verbindungen hergestellt durch die beschriebene Addition von Allylalkohol-Propylenoxid-Addukten (in der folgenden Tabelle 1 bezeichnet mit A, Kettenlänge x aus GPC) an Polymethyl-H-Siloxane (B, Kettenlänge=y). In Spalte 6 der Tabelle ist die Viskosität der Reaktionsprodukte eingetragen.

*Tabelle 1*

| Blockpolymerisat | Menge A (g) | Menge B (g) | x | y | Viskosität (mPa·s) |
|---|---|---|---|---|---|
| A3 | 219,8 | 72,5 | 60 | 18,8 | 549 |
| A4 | 170,0 | 61,5 | 42 | 15,8 | 317 |
| A5 | 177,8 | 72,0 | 42 | 18,8 | 347 |

*Vergleichsprodukte*

Zum Vergleich wurden Methylpolysiloxan-Polyoxypropylen-Blockmischpolymerisate gemäss der DE-PS 2345335 nach Vorschrift der DE-AS 1220615 (=US-PS 3398104) mit folgender Struktur synthetisiert:

$$(CH_3)_3SiO-\left[\begin{array}{c}CH_3\\ |\\ SiO\\ |\\ CH_3\end{array}\right]_v-\left[\begin{array}{c}CH_3\\ |\\ SiO\\ |\\ R\end{array}\right]_w-Si(CH_3)_3$$

mit $R = -(CH_2)_3-(OC_3H_6)_x-O-\overset{\overset{O}{\|}}{C}-CH_3$

und v=20, w=5, x=13.

Das Vergleichsprodukt wurde mit einer solchen Menge feindisperser Kieselsäure (Aerosil® R 972 der Firma Degussa) versetzt, dass im Endprodukt 7,5 Gewichtsprozent Aerosil enthalten waren.

III. *Zusammensetzung der Schaumdämpfungsmittel*

Unter Verwendung der vorstehend beschriebenen Blockpolymeren wurden die in den folgenden Tabellen angeführten Entschäumerrezepturen hergestellt (Mengenangaben in Gewichtsprozent). Die Abkürzungen EO und PO bedeuten Mol Ethylenoxid und Propylenoxid.

*Tabelle 2*

| | Beispiele 1 | 2 | 3 | 4 | 5 |
|---|---|---|---|---|---|
| Polysiloxan-Blockpolymerisat | 6,0 (A1) | 6,0 (A2) | 5,5 (A3) | 6,5 (A4) | 6,0 (A5) |
| Mineralöl (naphthenbasisch) | 70,0 | 70,0 | 70,0 | 74,0 | 72,0 |
| Dibehensäureester eines Blockpolymerisats aus 35 PO + 10 EO | 10,0 | 10,0 | 10,5 | 8,0 | 9,5 |
| Blockpolymerisat aus 30 PO + 4,5 EO | 7,0 | 7,0 | 7,0 | 6,0 | 6,5 |
| Nonylphenol + 9,5 EO | 2,5 | 2,5 | 2,5 | 2,5 | 2,5 |
| Mg-Distearat | 3,0 | 3,0 | 3,0 | 2,0 | 2,0 |
| Al-Distearat | 1,5 | 1,5 | 1,5 | 1,0 | 1,5 |

*Tabelle 3*

| | Beispiele 6 | 7 | 8 | 9 | 10 |
|---|---|---|---|---|---|
| Polysiloxan-Blockpolymerisat | 6,0 (A1) | 6,5 (A2) | 6,0 (A3) | 6,5 (A4) | 5,5 (A5) |
| Mineralöl (naphthenbasisch) | 81,5 | 80,5 | 82,0 | 82,0 | 80,0 |
| Oxystearylmonobehenat | 7,0 | 9,5 | 7,5 | 7,0 | 9,5 |
| Oleylalkohol + 6 EO | 3,0 | 3,0 | 3,0 | 3,0 | 3,0 |
| Al-Distearat | 1,5 | 1,0 | 1,0 | 1,0 | 1,5 |
| Al-Tristearat | 1,0 | 0,5 | 0,5 | 0,5 | 0,5 |

Die homogenisierten Entschäumer erwiesen sich auch nach 6- bis 10wöchiger Lagerung bei Raumtemperatur (22° C) als völlig stabil.

IV. *Anwendungstechnische Prüfung*

Zwecks anwendungstechnischer Prüfung wurden die Entschäumer in folgende Dispersionen eingearbeitet (Angaben in Gewichtsteilen=T).

1. *Seidenglanzfarbe*

345 T Vinylacetat-Vinylester-Copolymerisat-Dispersion (~ 50 Gewichtsprozent $H_2O$)
86 T Methylcellulose-Lösung (98 Gewichtsprozent $H_2O$)
7 T Natriumtripolyphosphat
137 T Titandioxid
116 T Calciumcarbonat
168 T Schwerspat
5 T Butyldiglykolacetat
5 T Dibutylphthalat
2 T Konservierungsmittel (Bromnitrodioxan)
1 T Ammoniak (30%ig)
65 T Wasser
5 T Schaumdämpfungsmittel gemäss Beispiel 1 bis 10

2. *Dispersionsfarbe*

404 T Polyacrylat-Copolymer-Dispersion (~50 Gewichtsprozent $H_2O$)
165 T Methylcellulose-Lösung (98 Gewichtsprozent $H_2O$)
2 T Natriumpolyacrylat
3 T Natriumtripolyphosphat
8 T Butylglykol
23 T Testbenzin
158 T Titandioxid
158 T Dolomit
38 T Glimmer
38 T Talkum
1 T Konservierungsmittel
1 T Ammoniak
5 T Schaumdämpfungsmittel gemäss Beispiel 1 bis 10

3. *Glanzlack*

504 T Acrylpolymer-Dispersion (~50 Gewichtsprozent $H_2O$)
74 T Propylenglykol
2 T Natriumpolyacrylat
252 T Titandioxid
81 T Ammoniumpolyacrylat-Lösung (97,5 Gewichtsprozent $H_2O$)
8 T Konservierungsmittel
17 T 2,2,4-Trimethylpentan-1,2-diol-diisobutyrat
30 T Wasser
1 T Entschäumer gemäss Beispiel 1 bis 10

Mit den hergestellten Dispersionsfarben wurden folgende anwendungstechnische Prüfungen durchgeführt.

a) *Prüfung der fertigen Farbe*

Unmittelbar nach der Herstellung der Dispersionsfarbe werden 80 T der Farbe mit 20 T Wasser gemischt und jeweils 1 Minute bei 2000 Upm mit einem Dissolver (Dispergierscheibe ⌀ 40 mm) gerührt. Mit diesem Gemisch wird ein tarierter Standzylinder bis zur 50-ml-Marke gefüllt und das Gewicht dieser Flüssigkeitsmenge bestimmt. Je höher das Gewicht der Probe, um so niedriger ist der Luftgehalt, um so besser also die Wirkung des Entschäumers. Angegeben wird der prozentuale Lufteinschluss, bezogen auf eine schaumfreie (ideale) Dispersion.

b) *Rakeltest auf Glasplatten*

Die Durchführung erfolgt mittels eines Filmziehgerätes. Die entschäumerhaltige Dispersion wird in den Rahmen der Rakel gegossen, welcher anschliessend mit gleichmässiger Geschwindigkeit über eine plane Oberfläche gezogen wird. Der entstandene Film trocknet an der Luft ab und wird anschliessend auf Lufteinschluss (Mikroschaum) und Verlaufs- beziehungsweise Silikonstörungen beurteilt. Im Falle des Glanzlackes (Rezeptur IV 3) wurde nach 24 Stunden zusätzlich eine Glanzmessung der Oberfläche (nach Gardner) durchgeführt.

c) *Test mit der Lammfellrolle (auf Glasplatten)*

Nach der Herstellung der Dispersionsfarbe werden 80 T Farbe mit 20 T Wasser gemischt und 1 Minute bei 2000 Upm mit einem Dissolver gerührt. Anschliessend wird die Probe mit Hilfe einer Anstrichrolle (Lammfellrolle) auf eine sorgfältig gereinigte Glasplatte aufgetragen. Nach dem Trocknen wird der Anstrich auf Lufteinschlüsse (Blasenbildung) visuell beurteilt.

d) *Test mit der Schwammwalze (auf Hartfaserplatten)*

Hartfaserplatten der Grösse 20×30×0,4 cm werden auf der glatten Seite mit einer 1:1 verdünnten Kunststoffdispersion durch Pinselauftrag abgesperrt. Nun werden 60 bis 70 g Farbe auf diese Platte gegeben und mit einer Schwammwalze so gleichmässig verteilt, dass 15 g nasser Farbe (=250 g/m²) verbleiben.

Die verwendete Schwammwalze mit einer Breite von 6 cm und einem Durchmesser von 7 cm besteht aus offenporigem Polyurethanschaum. Die Verwendung einer solchen Walze bringt den vorteil, dass nicht nur die in der Farbe eingeschlossenen Schaumbläschen beurteilt werden, sondern zusätzlich Luft in den Anstrich eingearbeitet wird, wie dies bei der Pinselapplikation, wenn auch in geringerem Masse, gegeben ist.

Die trockenen Anstriche werden nach folgender Vergleichsskala beurteilt:

1 = sehr starker Lufteinschluss
2 = starker Lufteinschluss
3 = mässiger Lufteinschluss
4 = wenig Lufteinschluss
5 = sehr wenig Lufteinschluss
6 = kein Lufteinschluss

Die Ergebnisse sind in Tabelle 4 zusammengestellt. Sie belegen die Überlegenheit der erfindungsgemässen Mittel.

*Tabelle 4*

| | Lufteinschluss (Gew.-%) | Rakeltest Einschlüsse (Note) | Rakeltest Glanz | Applikation auf Glasplatte (Note) | Applikation auf Hartfaserplatte (Note) |
|---|---|---|---|---|---|
| Seidenglanzfarbe | 17,1 - 19,5 | 5 - 6 | — | 3 - 4 | 4 |
| Vergleich | 26,5 | 2 | — | 3 | 3 |
| Dispersionsfarbe | 11,7 - 14,2 | 4 | — | 4 | 4 |
| Vergleich | 27,4 | 2 | — | 3 | 3 |
| Dispersionslack | 13,5 - 15,6 | 5 - 6 | 42 - 58 | 3 - 4 | 4 - 5 |
| Vergleich | 17,9 | 3 | 24,6 | 2 | 3 |

**Patentansprüche**

1. Schaumdämpfungsmittel, enthaltend Polysiloxan-Polyether-Blockpolymere und weitere schaumdämpfend wirkende Substanzen, die frei von hochdispersem Siliciumdioxid und Aluminiumoxid sind, gekennzeichnet durch die folgende Zusammensetzung

(A) 3 bis 10 Gewichtsprozent eines Polysiloxan-Polyether-Blockpolymerisats der Formel

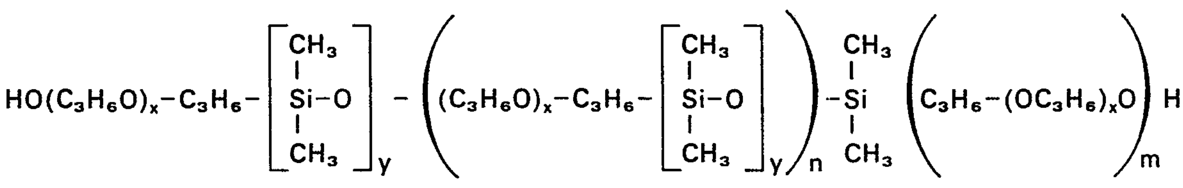

mit m=0 oder 1, n=0 bis 2, x=20 bis 100 und y=5 bis 30,

(B) 65 bis 85 Gewichtsprozent eines mit Wasser nicht mischbaren Öles aus der Klasse der Mineralöle, fetten Öle und Fettalkohole,

(C) 5 bis 30 Gewichtsprozent mindestens einer

weiteren schaumdämpfend wirkenden Substanz aus der Klasse der Polypropylenglykol-Polyethylenglykol-Blockpolymeren mit einem Molekulargewicht von 1000 bis 4000, deren Mono- oder Diester mit 18 bis 24 Kohlenstoffatome aufweisenden Fettsäuren und Hydroxyfettsäuren und der Mono- und Diester der genannten Fettsäuren und Hydroxyfettsäuren des Hydroxystearylalkohols,

(D) 1 bis 6 Gewichtsprozent mindestens eines Emulgiermittels aus der Klasse der 4 bis 12 Ethylenglykolethergruppen aufweisenden Polyglykoletherderivate von 12 bis 20 Kohlenstoffatome aufweisenden Alkoholen und 8 bis 12 Alkylkohlenstoffatome aufweisenden Alkylphenole,

(E) 1 bis 5 Gewichtsprozent mindestens einer Erdalkalimetall- oder Aluminiumseife von 16 bis 20 Kohlenstoffatome aufweisenden Fettsäuren.

2. Schaumdämpfungsmittel nach Anspruch 1, dadurch gekennzeichnet, dass die Komponente (A) in Mengen von 4 bis 8 Gewichtsprozent anwesend ist und dass die Symbole n=0 bis 1, x=30 bis 60 und y=10 bis 20 bedeuten.

3. Schaumdämpfungsmittel nach Anspruch 1 und 2, dadurch gekennzeichnet, dass die Komponente (B) in Mengen von 70 bis 82 Gewichtsprozent anwesend ist und aus Mineralöl besteht.

4. Schaumdämpfungsmittel nach Anspruch 1 bis 3, dadurch gekennzeichnet, dass die Komponente (C) in Mengen von 10 bis 20 Gewichtsprozent anwesend ist.

5. Schaumdämpfungsmittel nach Anspruch 1 bis 4, dadurch gekennzeichnet, dass die Komponente (D) in Mengen von 2 bis 5 Gewichtsprozent anwesend ist.

6. Schaumdämpfungsmittel nach Anspruch 1 bis 5, dadurch gekennzeichnet, dass die Komponente (E) in Mengen von 2 bis 4 Gewichtsprozent anwesend ist und aus dem Magnesium- oder Aluminiumsalz der Stearinsäure besteht.

7. Verwendung des Mittels nach Anspruch 1 bis 6 in wässerigen Kunstharz-, Lack- und Farbdispersionen.

## Claims

1. Foam-suppressing agents containing polysiloxane-polyether block polymers and other foam-suppressing substances which are free from highly disperse silicon dioxide and aluminium oxide, characterized by the following composition:

(A) from 3 to 10% by weight of a polysiloxane-polyether block polymer corresponding to the following formula

$$HO(C_3H_6O)_x-C_3H_6-\left[\begin{array}{c}CH_3\\ |\\ Si-O\\ |\\ CH_3\end{array}\right]_y-\left((C_3H_6O)_x-C_3H_6-\left[\begin{array}{c}CH_3\\ |\\ Si-O\\ |\\ CH_3\end{array}\right]_y\right)_n-\begin{array}{c}CH_3\\ |\\ Si\\ |\\ CH_3\end{array}\left(C_3H_6-(OC_3H_6)_xO\right)_m H$$

in which m=0 or 1, n=0 to 2, x=20 to 100 and y=5 to 30,

(B) from 65 to 85% by weight of a water-immiscible oil from the group comprising mineral oils, fatty oils and fatty alcohols,

(C) from 5 to 30% by weight of at least one other foam-suppressing substance from the group comprising polypropylene glycol-polyethylene glycol block polymers having a molecular weight of from 1,000 to 4,000, their mono- or diesters with $C_{18}$-$C_{24}$-fatty acids and hydroxy-fatty acids and the mono- and diesters of the said fatty acids and hydroxy-fatty acids of hydroxystearyl alcohol,

(D) from 1 to 6% by weight of at least one emulsifier from the group comprising polyglycol ether derivatives containing 4 to 12 ethylene glycol ether groups of $C_{12}$-$C_{20}$-alcohols and alkyl phenols containing from 8 to 12 alkyl carbon atoms,

(E) from 1 to 5% by weight of at least one alkaline-earth metal or aluminium soap of fatty acids containing from 16 to 20 carbon atoms.

2. Foam-suppressing agents as claimed in Claim 1, characterized in that component (A) is present in quantities of from 4 to 8% by weight and in that the symbols n, x and y represent 0-1, 30-60 and 10-20, respectively.

3. Foam-suppressing agents as claimed in Claims 1 and 2, characterized in that component (B) is present in quantities of from 70 to 82% by weight and consists of mineral oil.

4. Foam-suppressing agents as claimed in Claims 1 to 3, characterized in that component (C) is present in quantities of from 10 to 20% by weight.

5. Foam-suppressing agents as claimed in Claims 1 to 4, characterized in that component (D) is present in quantities of from 2 to 5% by weight.

6. Foam-suppressing agents as claimed in claims 1 to 5, characterized in that component (E) is present in quantities of from 2 to 4% by weight and consists of the magnesium or aluminium salt of stearic acid.

7. The use of the agents claimed in Claims 1 to 6 in aqueous synthetic resin, lacquer and dye dispersions.

## Revendications

1. Agent antimousses contenant des polymères en blocs de polysiloxane/polyéther et d'autres substances à action antimousses, sans oxyde d'aluminium et sans dioxyde de silicium en forte dispersion, caractérisé en ce qu'il a la composition suivante:

(A) 3 à 10% en poids d'un polymère en blocs de polysiloxane/polyéther de formule:

$$HO(C_3H_6O)_x-C_3H_6-\left[\begin{array}{c}CH_3\\ |\\ Si-O\\ |\\ CH_3\end{array}\right]_y-\left((C_3H_6O)_x-C_3H_6-\left[\begin{array}{c}CH_3\\ |\\ Si-O\\ |\\ CH_3\end{array}\right]_y\right)_n-\begin{array}{c}CH_3\\ |\\ Si\\ |\\ CH_3\end{array}\left(C_3H_6-(OC_3H_6)_xO\right)_m H$$

où m=0 ou 1, n=0 à 2, x=20 à 100 et y=5 à 30,

(B) 65 à 85% en poids d'une huile non miscible à l'eau choisie parmi la classe comprenant les huiles minérales, les huiles grasses et les alcools gras,

(C) 5 à 30% en poids d'au moins une autre substance à activité antimousses choisie parmi la classe comprenant les polymères en blocs de polypropylène-glycol/polyéthylène-glycol ayant un poids moléculaire de 1000 à 4000, leurs mono-esters ou leurs diesters avec des hydroxy-acides gras et des acides gras contenant 18 à 24 atomes de carbone, de même que les mono-esters et les diesters des hydroxy-acides gras et des acides gras mentionnés de l'alcool hydroxy-stearylique,

(D) 1 à 6% en poids d'au moins un agent émulsionnant choisi parmi la classe comprenant les dérivés de polyglycol-éthers (contenant 4 à 12 groupes d'éthylène-glycol-éther) d'alcools contenant 12 à 20 atomes de carbone et d'alkyl-phénols contenant 8 à 12 atomes de carbone alkyle,

(E) 1 à 5% en poids d'au moins un savon d'aluminium ou d'un métal alcalino-terreux d'un acide gras contenant 16 à 20 atomes de carbone.

2. Agent antimousses suivant la revendication 1, caractérisé en ce que le composant (A) est présent en quantités de 4 à 8% en poids et n=0 à 1, x=30 à 60 et y=10 à 20.

3. Agent antimousses suivant les revendications 1 et 2, caractérisé en ce que le composant (B) est présent en quantités de 70 à 82% en poids et est constitué d'une huile minérale.

4. Agent antimousses suivant les revendications 1 à 3, caractérisé en ce que le composant (C) est présent en quantités de 10 à 20% en poids.

5. Agent antimousses suivant les revendications 1 à 4, caractérisé en ce que le composant (D) est présent en quantités de 2 à 5% en poids.

6. Agent antimousses suivant les revendications 1 à 5, caractérisé en ce que le composant (E) est présent en quantités de 2 à 4% en poids et est constitué du sel de magnésium ou d'aluminium de l'acide stéarique.

7. Utilisation de l'agent suivant les revendications 1 à 6 dans des dispersions aqueuses de résines synthétiques, de vernis et de peintures.